# FASCICULE DE BREVET EUROPEEN

(11) **EP 2 181 031 B1**
(45) Date de publication et mention de la délivrance du brevet: **24.10.2012**
(21) Numéro de dépôt: 08830342.5
(22) Date de dépôt: 10.07.2008
(51) Int. Cl.: B62D 6/00

(54) **SYSTÈME DE DIRECTION ASSISTÉE DE VÉHICULE AUTOMOBILE**
SERVOLENKVORRICHTUNG FÜR AUTOMOBILE
POWER STEERING DEVICE FOR AUTOMOBILE

(30) Priorité: 23.07.2007 FR 0705346
(43) Date de publication de la demande: 05.05.2010
(73) Titulaire: Jtekt Europe, 69540 Irigny (FR)
(72) Inventeur: CASSAR, Stéphane, F-69300 Caluire (FR); KASBARIAN, Jean-Marc, F-69007 Lyon (FR)
(74) Mandataire: Chevalier, Renaud Philippe
(86) Numéro de dépôt international: PCT/FR2008/001010
(87) Numéro de publication internationale: WO 2009/034261

(56) Documents cités:
- DE-A1- 19 842 439
- FR-A- 2 804 648
- FR-A- 2 888 811
- US-A1- 2004 060 765

## Description

La présente invention concerne un système de direction assistée de véhicule automobile.

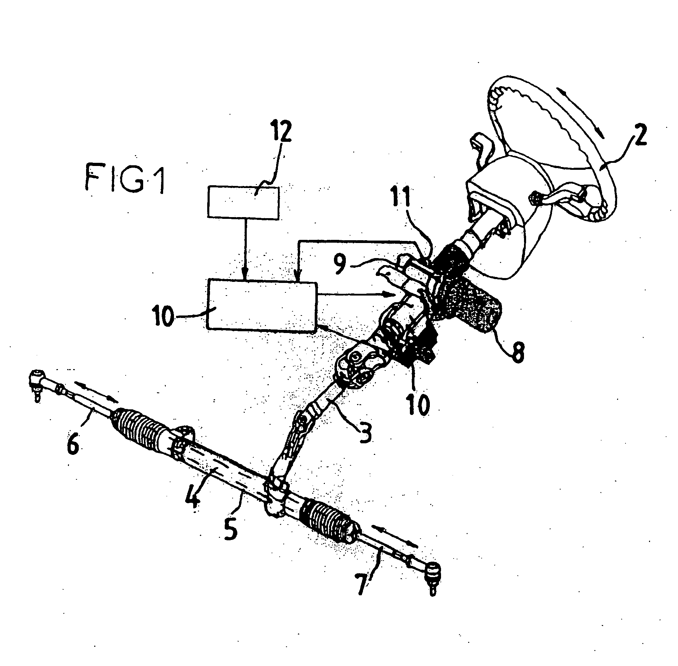

La figure 1 rappelle quels sont les principaux éléments composant un système de direction assistée, par exemple électrique, de véhicule automobile. Une telle direction comprend, d'une part, une partie mécanique comprenant un volant de conduite 2 lié en rotation à une colonne de direction 3, dont l'extrémité éloignée du volant 2 porte un pignon de direction en prise avec une crémaillère 4, montée coulissante dans un carter de direction 5. Les deux extrémités opposées de la crémaillère 4 sont respectivement liées, par l'intermédiaire de biellettes 6 et 7, aux roues directrices droite et gauche (non représentées) du véhicule. La direction comprend, pour assister l'effort manuel exercé par le conducteur du véhicule sur le volant 2, un moteur électrique d'assistance 8 à deux sens de rotation. L'arbre de sortie du moteur d'assistance est accouplé, par l'intermédiaire d'un réducteur de vitesse 9 notamment à vis sans fin et roue tangente ou à train d'engrenage, à la colonne de direction 3 ou au pignon de direction ou à la crémaillère 4 directement, de manière à transmettre un couple moteur (éventuellement aussi un couple résistant) à cet élément. Le moteur électrique d'assistance 8 est piloté par un calculateur électronique embarqué 10, qui reçoit et traite divers signaux, en provenance de capteurs.

Dans une réalisation habituelle, le calculateur électronique 10 reçoit notamment un signal électrique issu d'un capteur de couple 11 placé sur la colonne de direction 3, et mesurant ainsi le couple exercé par le conducteur sur le volant 2, et un signal électrique issu d'un capteur de vitesse du véhicule 12.

A partir de ces diverses informations, le calculateur électronique 10 pilote le moteur électrique d'assistance 8, en définissant à tout moment un couple ou un effort d'assistance, pouvant amplifier ou au contraire compenser l'effort appliqué par le conducteur sur le volant 2, selon des "lois d'assistance" prédéfinies.

Il doit être noté que les "lois d'assistance" prédéfinies ne tiennent pas compte de paramètres extérieurs au système de direction assistée influant sur la dynamique du véhicule, tels que par exemple le type et l'état (usure, gonflage, âge) des pneus du véhicule.

Or, il doit être noté que, pour une même situation de conduite (même virage, même vitesse, même conditions climatiques), le ressenti d'un conducteur d'un véhicule, c'est-à-dire le couple devant être exercé par le conducteur sur le volant de conduite pour déplacer ce dernier, est différent en fonction des paramètres extérieurs décrits ci-dessus.

Il en résulte que le ressenti du conducteur peut être incohérent avec la situation de conduite dû à l'influence de ces paramètres extérieurs.

Il est donc souhaitable de prendre en compte dans les "lois d'assistance" des paramètres complémentaires représentant de façon exacte la situation de conduite et l'état du véhicule en déplacement.

Le document de brevet FR 2888811 A décrit déjà un système de commande d'une direction de véhicule automobile, avec assistance, ce système de commande exploitant des signaux issus d'un capteur de couple de braquage et d'un capteur de vitesse du véhicule, et fournissant un signal de pilotage de l'assistance qui combine :
- Une amplitude d'assistance de base établie en fonction du couple de braquage et de la vitesse du véhicule,
- Une amplitude de correction d'assistance, prenant en compte diverses informations, y compris le couple de braquage et l'accélération latérale.

Cependant, la prise en compte de tels paramètres ne doit en aucun cas occasionner des instabilités dans le pilotage du moteur d'assistance pouvant remettre en cause la sécurité du conducteur et des passagers du véhicule.

Le problème technique à la base de l'invention consiste donc à fournir un système de direction assistée qui permette de maintenir cohérent le ressenti d'un conducteur d'un véhicule équipé de ce système avec la dynamique du véhicule, tout en ne remettant pas en cause la sécurité de ce dernier.

A cet effet, la présente invention concerne un système de direction assistée de véhicule automobile comprenant :
- des moyens de mesure de couple agencés pour mesurer le couple exercé par un conducteur sur le volant de conduite du véhicule automobile,
- des moyens de mesure de vitesse agencés pour mesurer la vitesse longitudinale du véhicule automobile,
- des moyens d'assistance agencés pour assister l'effort manuel exercé par le conducteur du véhicule sur le volant de conduite,
- des moyens de traitement agencés pour piloter les moyens d'assistance,
   les moyens de traitement comprenant des moyens de détermination d'un signal de pilotage des moyens d'assistance en fonction :
   ○ d'un premier signal de commande déterminé en fonction de la mesure du couple exercé par le conducteur sur le volant en appliquant un gain dépendant de la vitesse longitudinale du véhicule,
   ○ d'un second signal de correction déterminé en fonction de:
      ■ la mesure du couple exercé par le conducteur sur le volant, et
      ■ une consigne déterminée en fonction d'au moins un paramètre caractéristique de la dynamique latérale du véhicule,
caractérisé en ce que les moyens de détermination du signal de pilotage des moyens d'assistance limitent la prise en compte du second signal de correction de façon à maintenir le signal de pilotage dans un intervalle défini autour de la valeur du premier signal de commande.

La détermination du signal de pilotage des moyens d'assistance à partir notamment de la consigne permet de contrôler l'effort d'assistance de manière à faire tendre le ressenti du conducteur vers la consigne qui correspond par exemple à un ressenti normalement souhaité par un conducteur dans cette situation dynamique du véhicule.

La présente invention permet de plus d'adapter l'effort d'assistance de manière à contrôler le ressenti du conducteur en fonction de l'état dynamique latérale du véhicule. Cette disposition permet de prendre en compte les variations des paramètres extérieurs tels que par exemple le type et l'état des pneus puisque ces derniers engendrent des modifications de la dynamique du véhicule.

La prise en compte du signal de commande et du signal de correction permet à la fois de bénéficier d'un ressenti correspondant aux conditions dynamiques et de conserver un signal de commande de référence représentant un mode de fonctionnement sécurisé, les moyens de détermination pouvant réaliser un choix ou une combinaison du premier et du second signal suivant la situation de conduite et la cohérence de la consigne proposée avec cette situation.

De plus, le fait que les moyens de détermination du signal de pilotage des moyens d'assistance limitent la prise en compte du second signal de correction de façon à maintenir le signal de pilotage dans un intervalle défini autour de la valeur du premier signal de commande permet de limiter la prise en compte d'une consigne qui pourrait occasionner des instabilités dans le pilotage des moyens d'assistance pouvant remettre en cause la sécurité du conducteur et des passagers du véhicule.

Avantageusement, la largeur de l'intervalle est définie comme un pourcentage de la valeur du premier signal de commande.

Selon un mode de réalisation de l'invention, le second signal de correction est déterminé en fonction de la différence entre la mesure du couple exercé par le conducteur sur le volant, et la consigne déterminée en fonction d'au moins un paramètre caractéristique de la dynamique latérale du véhicule.

Selon un autre mode de réalisation de l'invention, le système comprend un organe agencé pour déterminer la consigne en fonction d'au moins un paramètre caractéristique de la dynamique latérale du véhicule.

Selon encore un autre mode de réalisation de l'invention, la consigne est déterminée en outre en fonction d'au moins un paramètre caractéristique de la dynamique verticale et/ou longitudinale du véhicule.

De toute façon l'invention sera bien comprise à l'aide de la description qui suit en référence au dessin schématique annexé représentant, à titre d'exemple non limitatif, une forme d'exécution de ce système de direction assistée électrique.
La figure 1 est une vue en perspective, schématisée, d'un système de direction assistée électrique sur colonne classique.
La figure 2 est une vue partielle schématisée d'un système de direction assistée électrique selon l'invention.

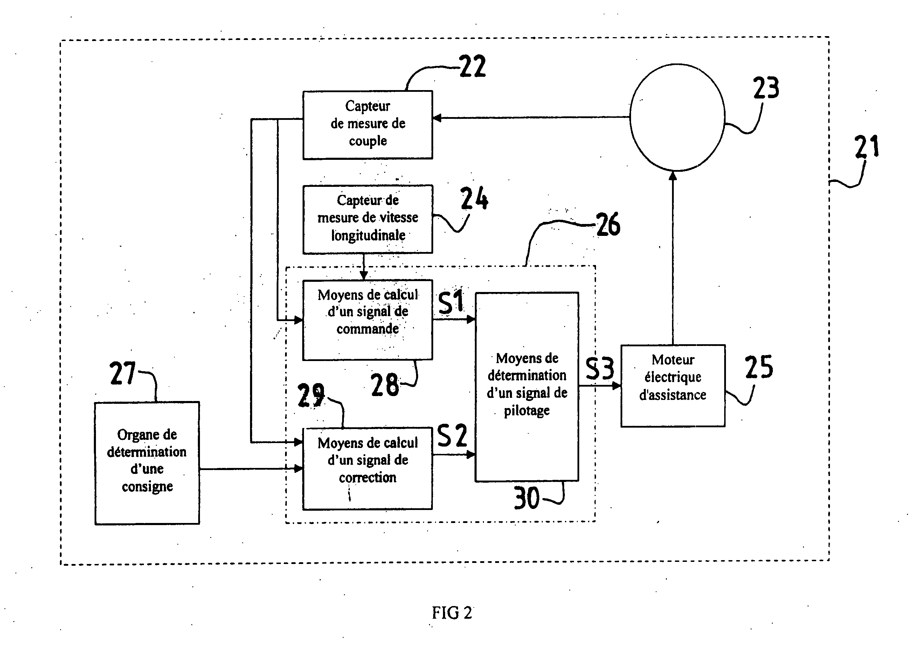

La figure 2 représente un système de direction assistée électrique 21 de véhicule automobile comprenant :
   - un capteur de mesure de couple 22 agencé pour mesurer le couple exercé par un conducteur sur le volant de conduite 23 du véhicule automobile,
   - un capteur de mesure de vitesse 24 agencé pour mesurer la vitesse longitudinale du véhicule automobile,
   - un moteur électrique d'assistance 25 agencé pour assister l'effort manuel exercé par le conducteur du véhicule sur le volant de conduite 23,
   - une unité de traitement 26 agencée pour piloter le moteur électrique d'assistance,
   - un organe 27 agencé pour déterminer une consigne en fonction d'au moins un paramètre caractéristique de la dynamique latérale, longitudinale et verticale du véhicule.

L'unité de traitement 26 comprend :
- des premiers moyens de calcul 28 d'un premier signal de commande S1 déterminé en fonction de la mesure du couple exercé par le conducteur sur le volant 23 en appliquant un gain dépendant de la vitesse longitudinale du véhicule,
- des seconds moyens de calcul 29 d'un second signal de correction S2 déterminé en fonction de la différence entre la mesure du couple exercé par le conducteur sur le volant, et de la consigne déterminée en fonction d'au moins un paramètre caractéristique de la dynamique latérale, longitudinale et verticale du véhicule,
- des moyens de détermination 30 d'un signal de pilotage S3 du moteur d'assistance en fonction du premier signal de commande et du second signal de correction.

Les moyens de détermination du signal de pilotage du moteur d'assistance 25 limitent la prise en compte du second signal de correction de façon à maintenir le signal de pilotage dans un intervalle défini autour de la valeur du premier signal de commande.

La largeur de l'intervalle est définie par exemple comme un pourcentage de la valeur du premier signal de commande.

Il doit être noté que les paramètres caractéristiques de la dynamique latérale du véhicule peuvent être la vitesse latérale, l'accélération latérale et la dérivée d'accélération latérale, ou tout autre caractéristique permettant de déterminer in fine la vitesse latérale, l'accélération latérale et la dérivée d'accélération latérale.

Il doit également être noté que les paramètres caractéristiques de la dynamique longitudinale du véhicule peuvent être la vitesse longitudinale, l'accélération longitudinale, la dérivée d'accélération longitudinale, les vitesses et accélération longitudinale des roues du véhicules, ou tout autre caractéristique permettant de déterminer in fine la vitesse longitudinale, l'accélération longitudinale et la dérivée d'accélération longitudinale.

Il doit être précisé que les paramètres caractéristiques de la dynamique verticale du véhicule peuvent être la vitesse verticale, l'accélération verticale, la dérivée d'accélération verticale ou tout autre caractéristique permettant de déterminer in fine la vitesse verticale, l'accélération verticale et la dérivée d'accélération verticale.

Les paramètres caractéristiques de la dynamique latérale, longitudinale et verticale peuvent également être l'angle du volant, la vitesse de braquage, l'accélération de braquage, la vitesse de lacet et l'accélération de lacet du véhicule, le couple fourni par le moteur du véhicule.

Selon un mode de réalisation de l'invention, les premiers et seconds moyens de calcul et les moyens de détermination pourraient être constitués par des fonctions électroniques ou logicielles agencées dans un même processeur, ou des processeurs distincts.

Comme il va de soi, l'invention ne se limite pas à la seule forme d'exécution de ce système de direction assistée, décrite ci-dessus à titre d'exemple, elle en embrasse au contraire toutes les variantes de réalisation. C'est ainsi notamment que le système de direction assistée pourrait être un système de direction assistée électrohydraulique ou un système de direction assistée hydraulique piloté.

## Revendications

1. Système de direction assistée (21) de véhicule automobile comprenant :
- des moyens de mesure de couple (22) agencés pour mesurer le couple exercé par un conducteur sur le volant de conduite (23) du véhicule automobile,
- des moyens de mesure de vitesse (24) agencés pour mesurer la vitesse longitudinale du véhicule automobile,
- des moyens d'assistance (25) agencés pour assister l'effort manuel exercé par le conducteur du véhicule sur le volant de conduite,
- des moyens de traitement (26) agencés pour piloter les moyens d'assistance,
les moyens de traitement (26) comprenant des moyens de détermination (30) d'un signal de pilotage (S3) des moyens d'assistance en fonction :
○ d'un premier signal de commande (S1) déterminé en fonction de la mesure du couple exercé par le conducteur sur le volant en appliquant un gain dépendant de la vitesse longitudinale du véhicule,
○ d'un second signal de correction (S2) déterminé en fonction de :
■ la mesure du couple exercé par le conducteur sur le volant, et
■ une consigne déterminée en fonction d'au moins un paramètre caractéristique de la dynamique latérale du véhicule,
**caractérisé en ce que** les moyens de détermination (30) du signal de pilotage des moyens d'assistance (25) limitent la prise en compte du second signal de correction (S2) de façon à maintenir le signal de pilotage (S3) dans un intervalle défini autour de la valeur du premier signal de commande (S1).

2. Système selon la revendication 1, dans lequel la largeur de l'intervalle est définie comme un pourcentage de la valeur du premier signal de commande (S1).

3. Système selon l'une des revendications précédentes, dans lequel le second signal de correction (S2) est déterminé en fonction de la différence entre la mesure du couple exercé par le conducteur sur le volant, et la consigne déterminée en fonction d'au moins un paramètre caractéristique de la dynamique latérale du véhicule.

4. Système selon l'une des revendications précédentes, comprenant un organe (27) agencé pour déterminer la consigne en fonction d'au moins un paramètre caractéristique de la dynamique latérale du véhicule.

5. Système selon l'une des revendications précédentes, dans lequel la consigne est déterminée en outre en fonction d'au moins un paramètre caractéristique de la dynamique verticale et/ou longitudinale du véhicule.

## Claims

1. A power steering system (21) for a motor vehicle, comprising:
- torque measurement means (22) designed to measure the torque applied by a driver to the steering wheel (23) of the motor vehicle,
- speed measurement means (24) designed to measure the longitudinal speed of the motor vehicle,
- power assistance means (25) designed to assist with the manual force applied by the driver of the vehicle to the steering wheel,
- processing means (26) designed to drive the power assistance means, the processing means (26) comprising determining means (30) for determining a driving signal (S3) for driving the power assistance means as a function:
- of a first, control, signal (S1) determined as a function of the measurement of the torque applied by the driver to the steering wheel by applying a gain that is dependent on the longitudinal speed of the vehicle,
- of a second, correction, signal (S2) determined as a function of:
• the measurement of the torque applied by the driver to the steering wheel, and
• a setpoint value determined as a function of at least one parameter characteristic of the lateral dynamics of the vehicle,
**characterized in that** the means (30) of determining the driving signal that drives the power assistance means (25) limit the extent to which the second, correction, signal (S2) is taken into consideration so as to keep the driving signal (S3) within a defined interval about the value of the first, control, signal (81).

2. The system as claimed in claim 1, in which the width of the interval is defined as a percentage of the value of the first, control, signal (S1).

3. The system as claimed in one of the preceding claims, in which the second, correction, signal (S2) is determined as a function of the difference between the measurement of the torque applied by the driver to the steering wheel and the setpoint value determined as a function of at least one parameter characteristic of the lateral dynamics of the vehicle.

4. The system as claimed in one of the preceding claims, comprising a component (27) designed to determine the setpoint value as a function of at least one parameter characteristic of the lateral dynamics of the vehicle.

5. The system as claimed in one of the preceding claims, in which the setpoint value is further determined as a function of at least one parameter characteristic of the vertical and/or longitudinal dynamics of the vehicle.

## Patentansprüche

1. Servolenksystem (21) eines Kraftfahrzeugs, das umfasst:
- Drehmomentmessmittel (22), die ausgebildet sind, um das Drehmoment, das von einem Kraftfahrer auf das Lenkrad (23) des Kraftfahrzeugs ausgeübt wird, zu messen,
- Geschwindigkeitsmessmittel (24), die ausgebildet sind, um die Längsgeschwindigkeit des Kraftfahrzeugs zu messen,
- Assistenzmittel (25), die ausgebildet sind, um die manuelle Kraft, die von dem Kraftfahrer auf das Lenkrad ausgeübt wird, zu unterstützen,
- Verarbeitungsmittel (26), die ausgebildet sind, um die Assistenzmittel zu steuern,
wobei die Verarbeitungsmittel (26) Bestimmungsmittel (30) eines Lenksignals (S3) der Assistenzmittel umfassen in Abhängigkeit von:
○ einem ersten Steuersignal (S1), das in Abhängigkeit von dem Messwert des Drehmoments, das von dem Kraftfahrer auf das Lenkrad durch Anwendung einer Verstärkung, die von der Längsgeschwindigkeit des Fahrzeugs abhängt, ausgeübt wird,
○ einem zweiten Korrektursignal (S2), das bestimmt wird in Abhängigkeit von:
• dem Messwert des Drehmoments, das von dem Kraftfahrer auf das Lenkrad ausgeübt wird, und
• einem Sollwert, der in Abhängigkeit von mindestens einem Parameter bestimmt wird, der für die Seitendynamik des Fahrzeugs charakteristisch ist,
**dadurch gekennzeichnet, dass** die Bestimmungsmittel (30) des Lenksignals (S3) der Assistenzmittel (25) die Berücksichtigung des zweiten Korrektursignals (S2) derart begrenzen, dass das Lenksignal (S3) in einem bestimmten Intervall um den Wert des ersten Steuersignals (S1) gehalten wird.

2. System nach Anspruch 1, wobei die Breite des Intervalls als ein Prozentsatz des Werts des ersten Steuersignals (S1) definiert ist.

3. System nach einem der vorangehenden Ansprüche, wobei das zweite Korrektursignal (S2) in Abhängigkeit von der Differenz zwischen dem Messwert des Drehmoments, das von dem Kraftfahrer auf das Lenkrad ausgeübt wird, und dem Sollwert, der in Abhängigkeit von mindestens einem für die Seitendynamik des Fahrzeugs charakteristischen Parameter bestimmt wird, bestimmt wird.

4. System nach einem der vorangehenden Ansprüche, das ein Organ (27) umfasst, das ausgebildet ist, um den Sollwert in Abhängigkeit von mindestens einem charakteristischen Parameter der Seitendynamik des Fahrzeugs zu bestimmen.

5. System nach einem der vorangehenden Ansprüche, wobei der Sollwert ferner in Abhängigkeit von mindestens einem charakteristischen Parameter der vertikalen und/oder Längsdynamik des Fahrzeugs bestimmt wird.
